Europäisches Patentamt

European Patent Office

Office européen des brevets

(19)

(11) EP 0 883 259 A2

(12) **EUROPÄISCHE PATENTANMELDUNG**

(43) Veröffentlichungstag:
09.12.1998 Patentblatt 1998/50

(51) Int Cl.⁶: H04J 13/00

(21) Anmeldenummer: 98440106.7

(22) Anmeldetag: 25.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 28.05.1997 DE 19722370

(71) Anmelder: Alcatel Alsthom Compagnie Generale
d'Electricité
75088 Paris (FR)

(72) Erfinder: Pfeiffer, Thomas, Dr.
70569 Stuttgart (DE)

(74) Vertreter: Schätzle, Albin, Dipl.-Phys. et al
c/o Alcatel Alsthom,
Intellectual Property Department,
P.O. Box 30 09 29
70449 Stuttgart (DE)

(54) **CDMA Empfänger für ein optisches Nachrichtenübertragungssystem und Verfahren zu dessen Betrieb**

(57) Es ist ein Empfänger zum Empfang kodierter optischer Nachrichtensignale in einem optischen, asynchronen Nachtrichtenübertragungssystem, welches nach einer auf periodischer Spektralkodierung basierenden CDMA-Methode arbeitet, beschrieben. Er besitzt eine erste (PD1) und eine zweite (PD2) optische Empfangseinheit, denen jeweils eine erste (Rx1) und eine zweite (Rx2) periodische optische Filtervorrichtung vorgeschaltet ist. Die Umlaufzeit der zweiten periodischen Filtervorrichtung (Rx2) ist gegenüber der Umlaufzeit der ersten Filtervorrichtung (Rx1) um etwa ein Viertel der Lichtwellenperiode des empfangenen Nachrichtensignales verstimmt. Die Eingänge der Filtervorrichtungen (Rx1, Rx2) sind über einen optischen Splitter (KOP) mit dem Nachrichtenübertragungssystem verbunden. Die Amplituden der Ausgangssignale der beiden Filer werden in zwei Quadriereinrichtungen (Q1, Q2) quadriert und mittels einer Addiervorrichtung (AD) addiert. Dadurch wird erreicht, daß der Empfänger (R) unempfindlicher gegen Verstimmung der Filterfunktion arbeitet.

Fig.5

Printed by Jouve, 75001 PARIS (FR)

**Beschreibung**

Die Erfindung betrifft einen optischen Empfänger für ein optisches Nachrichtenübertragungssystem gemäß dem Oberbegriff des Anspruchs 1 und ein Verfahren zum Betrieb dieses Nachrichtenübertragungssystems gemäß dem Oberbegriff des Anspruchs 3.

In einem Konferenzartikel von L. Möller ("An Optical CDMA Method Based on Periodic Spedrum Encoding", presented on the Thirteenth Annual Conference on European Fibre Optic Communications and Networks, Brighton, England, 1995, S.179-181) wird ein asynchrones Nachrichtenübertragungssystem beschrieben, welches nach einer auf periodischer Spektralkodierung basierenden CDMA-Methode (code-division multiple access) arbeitet. Dabei werden die verwendeten Kodewörter für den Zugriff durch verschiedene Filterfunktionen (Durchlaßfunktionen) periodischer Filter realisiert. Die Methode nutzt eine bestimmte periodische spektrale Filterung breitbandiger optischer Signalquellen, wobei ein Nachrichtensignal in einem Empfänger nur dann empfangen und verarbeitet werden kann, wenn die Periodizitäten der Filterfunktionen von Sender und Empfänger übereinstimmen.

Nachteilig wirkt sich bei diesem Verfahren aus, daß die Periodizität der Filterfunktionen von Sender und Empfänger hochgenau (Größenordnung von $10^{-5}$ relativ) übereinstimmen müssen. Diese Anforderung führt zu einer aufwendigen, geregelten Filteranordnung, um Drifts der Filterfunktion des Empfängers beispielsweise durch Temperaturveränderungen zu kompensieren.

Es ist daher eine Aufgabe der vorliegenden Erfindung, einen optischen Empfänger für ein Nachrichtenübertragungssystem der geschilderten Art anzugeben, bei dem weniger hohe Anforderungen an die Stabilität der Filterfunktion gestellt werden müssen. Eine weitere Aufgabe ist es, ein Verfahren anzugeben, nach dem eine Nachrichtensignalübertragung in einem solchen Nachrichtenübertragungssystem abläuft.

Die Aufgabe wird hinsichtlich des Empfängers gelöst durch die Merkmale des Patentanspruchs 1 oder alternativ durch die Merkmale des Patentanspruchs 4 und hinsichtlich des Verfahrens durch die Merkmale des Patentanspruchs 3 oder alternativ durch die Merkmale des Patentanspruchs 8. Vorteilhafte Ausgestaltungen sind den abhängigen Patentansprüchen zu entnehmen.

Beiden alternativen Ausführungsformen der Erfindung liegt der gemeinsame Grundgedanke zugrunde, Mittel vorzusehen, damit bei Verstimmung des Empfängerfilters gegen eine Sollfilterfunktion, ein geringerer Abfall der Empfangsleistung als bisher erreicht wird, und zwar derart, daß die Empfangsleistung bei unbeabsichtigter Verstimmung der Filterfunktion gegen die Sollfilterfunktion nicht die bisherige Abstimmkurve mit zahlreichen scharfen Minima und Maxima durchläuft, sondern lediglich deren Einhüllende.

Ein Vorteil der Erfindung liegt darin, daß der Filter nur auf etwa 1% stabil sein braucht und die Anforderung an die Stabilität des Filters damit um mindestens zwei Größenordnungen geringer ist als bisher.

Ein weiterer Vorteil besteht darin, daß bei der erfindungsgemäßen Anordnung auf eine aktive Regelung des Filters zur Stabilisierung der Filterfunktion verzichtet werden kann. Dadurch ist diese Anordnung mit geringerem Aufwand und geringeren Kosten als bisher realisierbar.

Im folgenden wird die Erfindung anhand der Figuren 1-11 in mehreren Ausführungsbeispielen erläutert. Es zeigt:

Fig.1     Ein optisches Nachrichtenübertragungssystem mit Sendern und einem Empfänger,
Fig.2     ein optisches Nachrichtenübertragungssystem mit einem Sender und einem Empfänger,
Fig.3     ein Blockdiagramm eines erfindungsgemäßen Empfängers,
Fig.4     die Filteranordnung des Empfängers aus Fig.3,
Fig.5     eine Weiterbildung des Empfängers aus Figur 3,
Fig.6     ein Blockdiagramm eines anderen erfindungsgemäßen Empfängers,
Fig.7     eine Weiterbildung des Empfängers aus Figur 6,
Fig.8     eine Weiterbildung des Empfängers aus Figur 7,
Fig.9     eine Weiterbildung des Empfängers aus Figur 8,
Fig.10a   eine erste Meßkurve der Empfangsleistung bei Verstimmung des Empfängerfilters,
Fig.10b   eine zweite Meßkurve der Empfangsleistung bei Verstimmung des Empfängerfilters und
Fig.11    eine dritte Meßkurve der Empfangsleistung bei Verstimmung des Empfängerfilters.

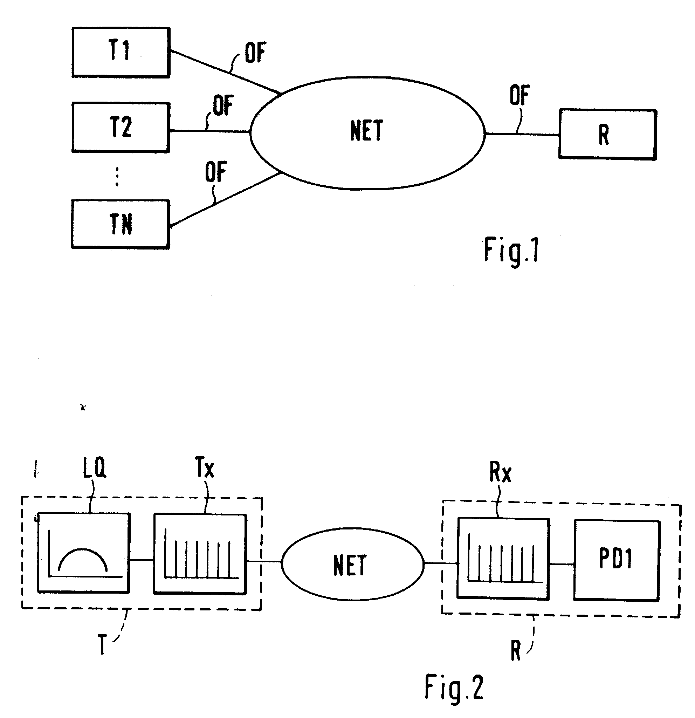

Ein optisches Nachrichtenübertragungssystem ist in Figur 1 gezeigt. Es besteht aus N optischen Sendern T1, ..., TN und einem optischen Empfänger R, die untereinander über ein optisches Nachrichtenübertragungsnetz NET und optische Fasern OF verbunden sind. Das Nachrichtenübertragungssystem kann auch weitere optische Empfänger enthalten.

In dem Nachrichtenübertragungssystem werden optische Nachrichtensignale kodiert übertragen. Die Kodierung erfolgt durch eine Filterung von mit der zu übertragenden Nachricht modulierten Lichtsignalen im Sender. Dazu wird ein periodischer Filter, beispielsweise ein Fabry-Perot-Interferometer oder ein Mach-Zehnder-Interferometer verwendet. Die Dekodierung im Empfänger erfolgt durch Filterung der empfangenen Nachrichtensignale mit einem gleichartigen Filter. Dabei müssen die Periodizitäten der Filterfunktionen von Senderfilter und Empfängerfilter übereinstimmen, denn nur dann wird am Ausgang des Empfängerfilters ein Signal erhalten. Hierbei ist es vorteilhaft, wenn die Filter von Sender und Empfänger polarisationsunabhängig arbeiten.

Bei dieser Anordnung können alle Sender gleichzeitig und asynchron im gleichen Frequenzband Nachrichtensignale senden, die dann alle unabhängig von einander von einem oder mehreren Empfängern empfangen werden können. Es handelt sich also um ein Kodemultiplex-Verfahren (CDMA: code-division multiple access), wobei der Kode zum Zugriff auf ein bestimmtes Nachrichtensignal durch die Filterfunktion des periodischen Filters im Sender und Empfänger realisiert ist. Die einzelnen Sender müssen dazu jeweils Filterfunktionen mit unterschiedlicher Periodizität verwenden, damit sie nicht den Kode eines anderen Senders stören. Die einzelnen Nachrichtensignale verschiedener Sender werden im folgenden als Kanäle bezeichnet.

Ein Sender T und ein Empfänger R, die über das Nachrichtenübertragungsnetz NET verbunden sind, sind in Figur 2 detaillierter gezeigt. Der Sender T enthält eine direktmodulierte, breitbandige Signallichtquelle LQ, beispielsweise einen Multi-Mode-Laser mit einem Wellenlängenspektrum von 1520 bis 1580 nm oder auch eine Leuchtdiode (LED), und einen Filter Tx. Der Empfänger weist ebenfalls einen Filter Rx auf, an dessen Ausgang eine optische Empfangseinheit PD1, beispielsweise ein Photodetektor oder eine Photodiode, angeschlossen ist. Bei bisher bekannten Empfängern ist es notwendig, daß der Filter auf eine Genauigkeit von etwa $10^{-5}$ gegen Schwankungen der Filterfunktion stabilisiert ist, damit ein störungsfreier Empfang des von dem Sender T gesendeten Nachrichtensignales möglich ist.

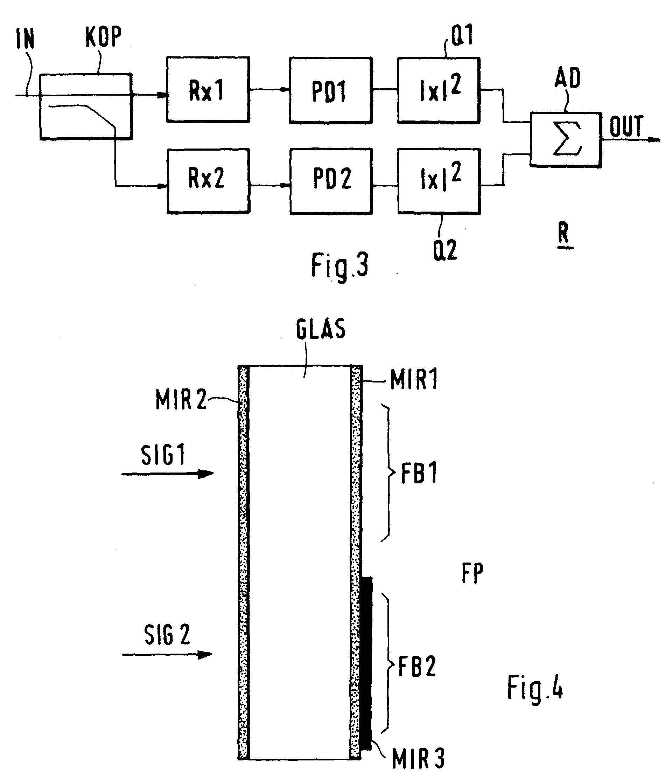

Ein erfindungsgemäßer Empfänger R ist in einem ersten Ausführungsbeispiel in Figur 3 gezeigt. Das Nachrichtensignal wird in dieser Anordnung am Eingang IN von einem Splitter KOP in zwei Signalanteile aufgespalten. Der Splitter KOP ist mit zwei optischen Filtern Rx1, Rx2 verbunden, und zwar so, daß jeder optische Filter Rx1, Rx2 einen der zwei Signalanteile erhält. Die optischen Filter Rx1, Rx2 sind so gegeneinander verstimmt, daß die Umlaufzeit $\tau_{Rx2}$ des zweiten Filters Rx2 sich von der Umlaufzeit $\tau_{Rx1}$ des ersten Filters Rx1 um etwa ein Viertel der mittleren Lichtwellenperiode des empfangenen Nachrichtensignales unterscheidet.

Der Filter Rx kann ein Fabry-Perot-Interferometer sein, welches aus planparallelen, teilverspiegelten Glasplatten besteht. Eine andere Möglichkeit besteht darin, als Filter ein Mach-Zehnder-Interferometer, beispielsweise auf Lithiumniobat-Basis (LiNbO$_3$), zu verwenden. Es können auch ein Michelson-Interferometer, ein Arrayed-Waveguide-Grating oder ein Lyot-Filter verwendet werden.

Die Umlaufzeit ist eine Kenngröße des Filters. Sie beschreibt im Falle des Fabry-Perot-Interferometers den Gangunterschied einer Lichtwelle zwischen den beiden Spiegelflächen des Interferometers, d.h. die Differenz zwischen den Laufzeiten einer einmal zwischen den Spiegelflächen hin- und hergespiegelten Lichtwelle und einer direkt transmittierten Lichtwelle. Im Falle des Mach-Zehnder-Interferometers ist die Umlaufzeit der Laufzeitunterschied einer Lichtwelle zwischen den beiden Interferometerzweigen. Da für die Nachrichtenübertragung ein bestimmter Spektralbereich, beispielsweise 1520 bis 1580 nm, verwendet wird, kommt es nicht auf eine genaue Verstimmung der Umlaufzeit des zweiten Filters gegen den ersten an. In dem beispielhaft genannten Wellenlängenbereich wäre ein Unterschied der Umlaufzeiten von 1,28fs (entspricht einer Viertel Lichtwellenperiode bei 1550nm) optimal. Ausreichend ist jedoch ein Unterschied im Toleranzbereich von 1,3fs ±10% und mit vertretbaren Einbußen an Unempfindlichkeit gegen Verstimmung der Filterfunktion auch von 1,3fs ±20%. (1500nm entspricht einer Lichtwellenperiode von 5fs, 1600nm von 5,33fs)

In dem ersten Ausführungsbeispiel wird dieser Unterschied der Umlaufzeiten wie in Figur 4 gezeigt erreicht. Es wird einziges Fabry-Perot-Interferometer FP verwendet, welches einen ersten und einen zweiten Filterbereich FB1, FB2 als ersten und zweiten Filter Rx1, Rx2 aufweist. Es besteht aus einer Glasplatte GLAS, die auf beiden Seiten mit einer teildurchlässigen Beschichtung MIR1, MIR2 verspiegelt ist. In dem zweiten Filterbereich FB2 ist auf einer Seite eine dritte Beschichtung MIR3 aus Material mit gleichem Brechungsindex aufgebracht, wobei die Schichtdicke der dritten Beschichtung gerade so gewählt ist, daß ein Laufzeitunterschied von beispielsweise 1,3fs hervorgerufen wird. Dieses Fabry-Perot-Interferometer FP ist im Empfänger R so in den Strahlengang justiert, daß die beiden vom Splitter KOP kommenden Signalanteile SIG1, SIG2 jeweils auf einen der beiden Filterbereiche FB1, FB2 treffen.

Den beiden Filtern Fx1, Fx2 in Figur 3 sind jeweils eine Empfangseinheit PD1, PD2, beispielsweise eine Photodiode, nachgeschaltet, die die optischen Signale in elektrische wandeln. An den Ausgang der beiden Empfangseinheiten PD1, PD2 ist jeweils eine Quadriereinrichtung Q1, Q2 angeschlossen, die die Amplitude der beiden Ausgangssignale quadriert. In einem nachgeschalteten Addierer AD werden die beiden quadrierten Ausgangssignale der beiden Quadrierer Q1, Q2 addiert. Das Ergebnis ist ein mit der übertragenen Nachricht moduliertes Ausgangssignal OUT, welches äußerst robust gegen Veränderungen der Filterfunktion beider Filter ist. Es reicht dabei aus, wenn die Filter auf eine Genauigkeit von 1% stabil sind, lediglich der Unterschied der Umlaufzeiten der beiden Filter muß in den oben angegebenen Grenzen bleiben.

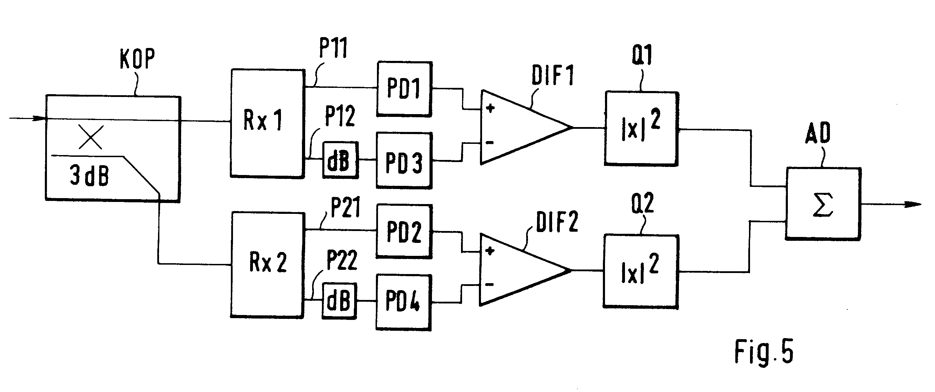

Eine vorteilhafte Weiterbildung der Anordnung aus Figur 3 ist als zweites Ausführungsbeispiel in Figur 5 dargestellt. Hierbei werden als erstes Rx1 und zweites Rx2 Filter jeweils Filter mit zwei Ausgängen P11, P12, P21, P22 verwendet, die jeweils komplementäre Ausgangssignale liefern. Mit komplementär ist bezeichnet, daß die Summe beider Ausgangssignale das Eingangssignal des jeweiligen Filters ergibt. Die beiden Ausgangssignale werden jeweils in zwei getrennten Empfangseinheiten PD1, PD3 und PD2, PD4 in elektrische Signale umgewandelt. Die beiden elektrischen Signale, die aus den zueinander komplementären Ausgangssignalen eines der Filter Rx1, Rx2 erzeugt sind, werden dann jeweils in einem Differenzverstärker DIF1, DIF2 von einander abgezogen. Dies hat den Vorteil, daß Nebensprechen von anderen Kanälen vermindert wird. Durch ein einstellbares Dämpfungsglied dB, welches zwischem dem zweiten Ausgang jedes Filters und der jeweiligen Empfangseinheit angeordnet ist, kann Nebensprechen besonders wirksam kompensiert werden.

Bei der Verwendung eines Fabry-Perot-Interferometers sind die beiden komplementären Ausgangssignale der transmittierte und der reflektierte Anteil des von dem Splitter KOP erhaltenen Eingangssignales. Der reflektierte Anteil kann dabei mittels eines weiteren nicht gezeigten Splitters aus der am Eingang IN angeschlossenen optischen Faser ausgekoppelt werden. Bei der Verwendung eines Mach-Zehnder-Interferometers, das über zwei Ausgangszweige verfügt, sind die beiden komplementären Ausgangssignale die Signalanteile des empfangenen Nachrichtensignales aus den beiden Ausgangszweigen.

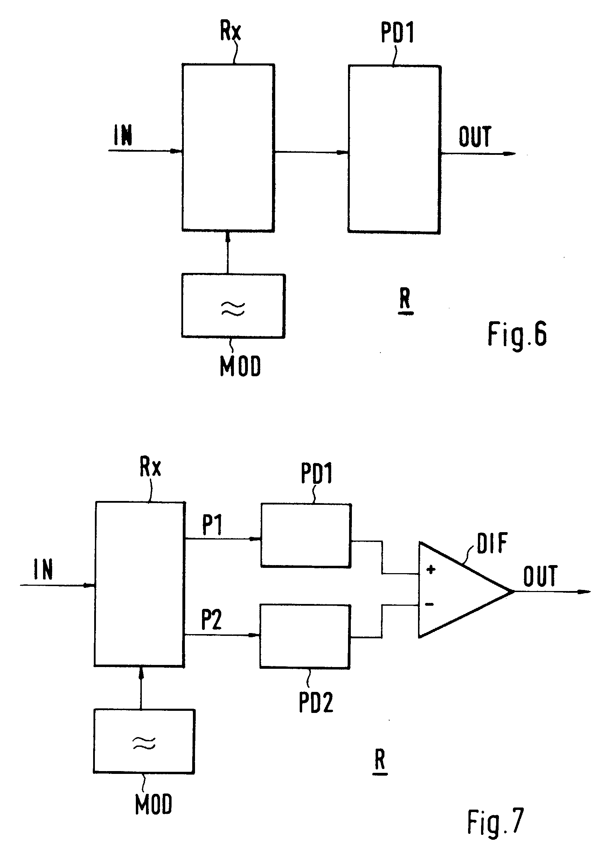

Eine alternative erfindungsgemäße Vorrichtung , die nach dem gleichen Grundprinzip wirkt, ist in Figur 6 in einem dritten Ausführungsbeispiel gezeigt. Auch bei diesem Empfänger R barucht die Filterfunktion nur noch auf etwa 1% Genauigkeit stabilisiert zu werden. Dazu ist der vor die Empfangseinheit PD1 geschaltete Filter Rx mit einer Modulationseinrichtung MOD verbunden, die die Filterfunktion des Filters Rx mit einer Frequenz f moduliert, die größer ist, als die Bitwiederholrate empfangener Nachrichtensignale. Die Empfangseinheit PD1 liefert an ihrem Ausgang ein mit der übertragenen Nachricht moduliertes elektrisches Signal.

Der Filter Rx kann ein Fabry-Perot-Interferometer sein, welches aus planparallelen, teilverspiegelten Glasplatten besteht, zwischen denen als Abstandshalter ein Piezoelement angebracht ist. Durch Anlegen einer Modulationsspannung mit sinusförmigem Verlauf an das Piezoelement wird der Abstand zwischen den Glasplatten variiert und die Filterfunktion des Filters dadurch moduliert. Eine andere Möglichkeit besteht darin, als Filter ein Mach-Zehnder-Interferometer, beispielsweise auf Lithiumniobat-Basis $(LiNbO_3)$, zu verwenden, bei dem die optische Weglänge in einem der Interferometerzweige durch Anlegen einer Modulationsspannung verändert werden kann. Auch bei dieser Ausführungsform wird eine Modulation der Filterfunktion erreicht.

Eine auf dem ersten Ausführungsbeispiel basierende Weiterbildung ist in Figur 5 in einem zweiten Ausführungsbeispiel gezeigt. Hierbei wird ein Filter Rx mit zwei Ausgängen P1, P2 verwendet, die komplementäre Ausgangssignale liefern. Mit komplementär ist bezeichnet, daß die Summe beider Ausgangssignale das Eingangssignal ergibt. Die beiden Ausgangssignale werden in zwei getrennten Empfangseinheiten PD1, PD2 in elektrische Signale umgewandelt, die dann in einem Differenzverstärker DIF von einander abgezogen werden. Dies hat den Vorteil, daß Nebensprechen von anderen Kanälen vermindert wird.

Bei der Verwendung eines Fabry-Perot-Interferometers sind die beiden komplementären Ausgangssignale der transmittierte und der reflektierte Anteil des aus dem Nachrichtenübertragungsnetz empfangenen Nachrichtensignales. Der reflektierte Anteil kann dabei mittels eines Splitters aus der am Eingang IN angeschlossenen optischen Faser ausgekoppelt werden. Vorteilhaft ist es dann, zwischen dem Ausgang für den reflektierten Signalanteil und dem Differenzverstärker ein einstellbares Dämpfungsglied vorzusehen. Bei der Verwendung eines Mach-Zehnder-Interferometers sind die beiden komplementären Ausgangssignale die Signalanteile des empfangenen Nachrichtensignales aus den beiden Ausgangszweigen des Interferometers.

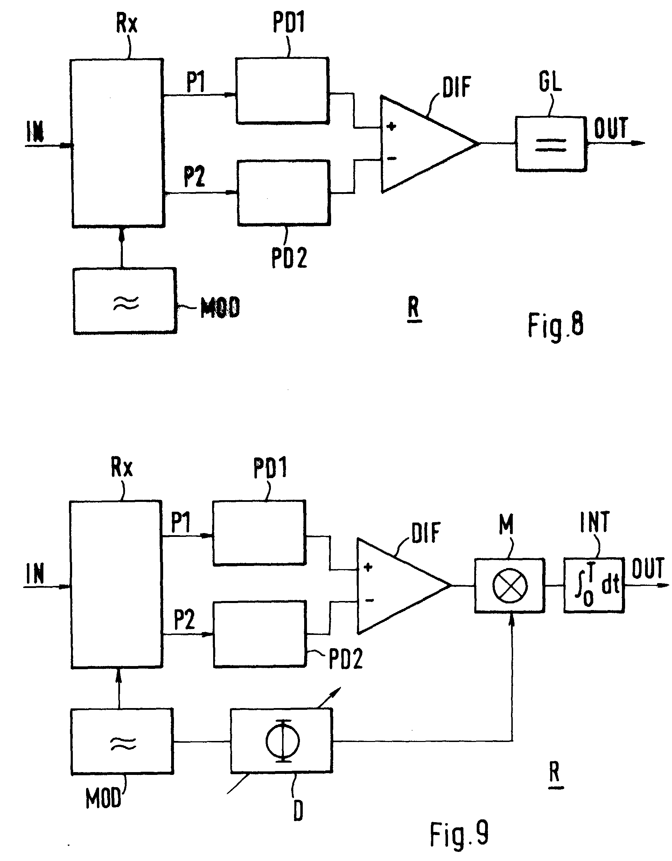

Da der Differenzverstärker ein bipolares Ausgangssignal liefert, wird an seinem Ausgang vorteilhafterweise ein Gleichrichter GL angeschlossen. Diese Weiterbildung ist als fünftes Ausführungsbeispiel in Figur 8 gezeigt.

Das sechste, in Figur 9 gezeigte Ausführungsbeispiel stellt eine besonders einfache Realisierung des Gleichrichters aus dem dritten Ausführungsbeispiel dar. Der Gleichrichter enthält eine Multiplikationsvorrichtung M und einen Integrator INT. Das bipolare Ausgangssignal des Differenzverstärkers DIF wird in dem Multiplikator M mit dem Frequenzssignal der Modulationsvorrichtung multipliziert. Bei dem Frequenssignal handelt es sich um das gleiche Frequenzsignal mit dem der Filter Rx moduliert wird. Durch phasen richtige Multiplikation dieses Frequenzsignals mit dem Ausgangssignal des Differenzverstärkers DIF und anschließende Integration mit einem nachgeschalteten Integrator INT wird eine Gleichrichtung des Ausgangssignales erreicht. Um die phasenrichtige Multiplikation zu gewährleisten, ist zwischen der Modulationseinrichtung MOD und der Multiplikationseinrichtung M ein einstellbarer Phasenschieber D angeordnet. Der Integrator INT integriert das Ausgangssignal der Multiplikationseinrichtung M über eine Zeitspanne die einer Periode der Bitwiderholrate des empfangenen Nachrichtensignales entspricht.

Die Wirkungsweise der Erfindung liegt darin, daß bei Verstimmung des Empfängerfilters gegen eine Sollfilterfunktion, ein geringerer Abfall der Empfangsleistung als bisher erreicht wird, und zwar derart, daß die Empfangsleistung bei unbeabsichtigter Verstimmung der Filterfunktion gegen die Sollfilterfunktion nicht die bisherige Abstimmkurve mit zahlreichen scharfen Minima und Maxima durchläuft, sondern lediglich deren Einhüllende.

Für ein Mach-Zehnder-Interferometer ist die Filterfunktion T(f), d.h. die Durchlaßfunktion, die in Abhängigkeit der Frequenz f eines eingetrahlten Signales angibt welcher Anteil des Signales durch den Filter durchgelassen wird, gegeben durch: (mit $\tau$ als Umlaufzeit des Filters)

$$T(f) \propto 1 + \cos(2\pi f \tau) \tag{1}$$

Bei der Verwendung anderer Filter, beispielsweise eines Fabry-Perot-Interferometers oder eines Arrayed Waveguide Grating, gilt ähnliches, wie sich durch Entwicklung in einer Fourrierreihe zeigen läßt. Hierbei treten lediglich höhere Terme in $\tau$ auf, die geringe Abweichungen von der im folgenden beschriebenen Abstimmkurve bewirken.

Für die empfangene optische Leistung im Empfänger gilt:

$$P_{Rx} = \int_0^\infty S(f) \cdot T_{Tx}(f) \cdot T_{Rx}(f) \cdot df \tag{2}$$

wobei $T_{Tx}(f)$ die Filterfunktion des Sendefilters, $T_{Rx}(f)$ die Filterfunktion des Empfängerfilters und $S(f)$ die spektrale Verteilung der Signallichtquelle im Sender ist. Aus den Beziehungen (1) und (2) läßt sich herleiten, daß die Abstimmkurve, das ist die Kurve, nach der die empfangene Gesamtleistung bei Verstimmung des Empfängerfilters gegen den Senderfilter (Sollfilterfunktion) abnimmt, die Cosinus-Transformierte der spektralen Verteilung der Signallichtquelle ist.

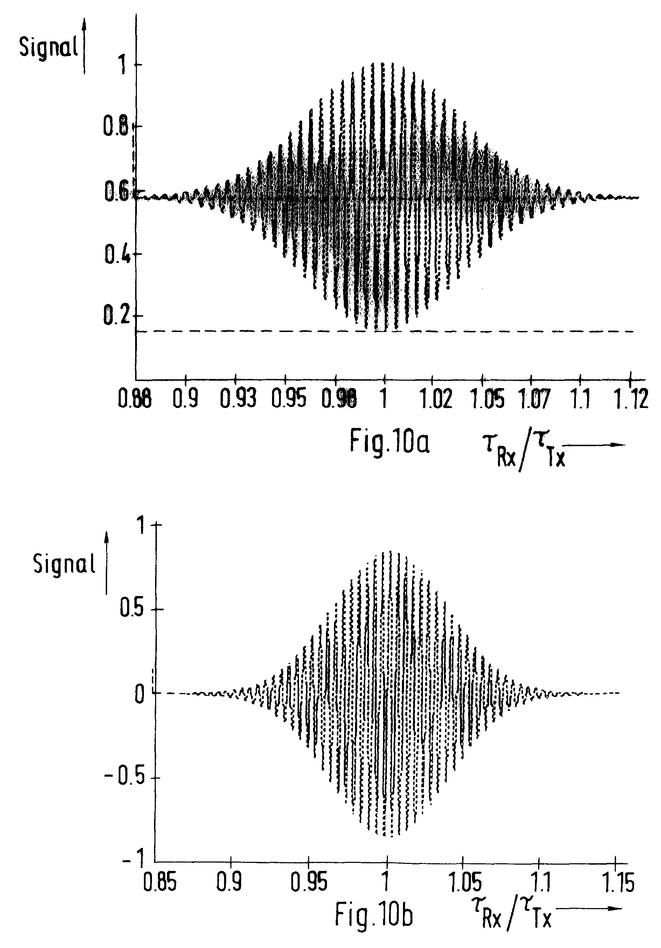

Für eine gaußförmige spektrale Verteilung der Signallichtquelle ist diese Abstimmkurve in Figur 10a dargestellt. Als Abszisse ist die relative Verstimmung des Empfängerfilters gegen den Senderfilter, ausgedrückt als Quotient der Umlaufzeiten der Filter $\tau_{Rx}/\tau_{Tx}$ aufgetragen. Als Ordinate ist die auf die Gesamtleistung der Lichtquelle normierte Empfangsleistung aufgetragen. Die Abstimmkurve weist deutlich erkennbare scharfe Maxima und Minima auf, während die Einhüllende der Abstimmkurve nur langsam gegen einen Mittelwert, der als konstanter Offset abgezogen werden kann, strebt.

Aus der gezeigten Abstimmkurve läßt sich erkennen, daß bereits bei geringfügiger Verstimmung des Empfängerfilters, beispielsweise durch Temperaturschwankungen, ein dramatischer Abfall der Emfpangsleistung auftritt, was zu einem Signalverlust am Empfänger führen würde.

In Figur 10b ist die Abstimmkurve für den Fall eines bipolaren Ausgangssignals bei Verwendung des in Figur 5 und Figur 7-9 gezeigten Differenzverstärkers zur Reduzierung des Nebensprechens gezeigt.

Die Grundidee der Erfindung besteht darin, Maßnahmen vorzusehen, durch die bei Verstimmung des Empfängerfilters nicht die in den Figuren 10a oder 10b gezeigte Abstimmkurve, sondern deren Einhüllende durchlaufen wird. Dadurch werden Signaleinbrüche, die bei Verstimmung des Empfängerfilters durch die scharfen Minima der Abstimmkurve entstehen, vermieden.

Dazu wird ein zweiter Filter eingesetzt. Der von diesem durchgelassene Signalanteil durchläuft bei Verstimmung eine zweite Abstimmkurve. Wie aus Figur 10a und 10b ersichtlich ist, handelt es sich bei der Funktion unter der Einhüllenden der Abstimmkurve um eine Cosinus-Funktion. Der zweite Filter ist gegen den ersten so verstimmt, daß die Abstimmkurve des zweiten gegen die Abstimmkurve des ersten Filters um eine Viertel Periode dieser Cosinus-Funktion verschoben ist. Dies entspricht einer Phasenverschiebung der Cosinusfunktion von $\pi/4$, wodurch sich bekanntlich aus der Cosinus-Funktion eine Sinus-Funktion ergibt. Aus der allgemein gültigen Beziehung

$$(\cos x)^2 + (\sin x)^2 = 1 \qquad \text{für alle } x \in \Re \tag{3}$$

begründet sich die Tatsache, daß durch Quadrieren und anschließendes Addieren der von den beiden Filtern erhaltenen Signalanteile die Einhüllende der Abstimmkurven erhalten wird

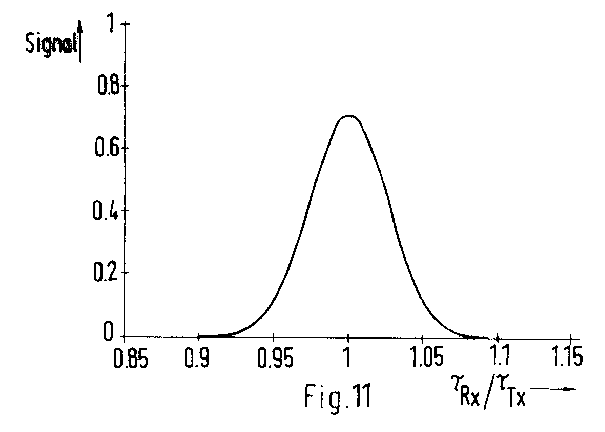

In Figur 11 ist eine Meßkurve gezeigt die sies verdeutlicht. Sie zeigt wie Figur 10a und 10b die auf die Gesamtleistung der Lichtquelle normierte Empfangsleistung (Signal) aufgetragen gegen die relative Verstimmung ($\tau_{Rx}/\tau_{Tx}$) des Empfängerfilters gegen den Senderfilter. Die Meßkurve wurde mit dem Aufbau des zweiten Ausführungsbeispieles (Figur 5) aufgenommen und stellt die Einhüllende der Abstimmkurve aus Figur 10b dar.

Alternativ wird ein Durchlaufen dieser Einhüllenden bei Verstimmung des Empfägerfilters dadurch erreicht, daß der Filter des Empfängers mit einer Modulationsfrequenz moduliert wird, die größer ist, als die Bitwiederholrate empfangener Nachrichtensignale, und anschließende Integration über eine Bitperiode. Dadurch ist gewährleistet, daß während der Zeitspanne jedes empfangenen Bits zumindest einmal ein Maximum der Abstimmkurve durchlaufen wird.

Bei einem erfindungsgemäßen Übertragungsverfahren werden zunächst modulierte Lichtsignale, die beispielsweise mittels einer direktmodulierten, breitbandigen Lichtquelle erzeugt werden, mit einem periodischen Senderfilter kodiert. Die kodierten Lichtsignale werden über ein Nachrichtenübertragungsnetz übertragen und in einem Empfänger nach einer der in den Ausführungsbeispielen geschilderten Bauarten wieder mittels des Empfängerfilters dekodiert und mittels der Empfangseinheit in elektrische Signale umgewandelt.

Bei diesem Übertragungsverfahren ergibt sich der besondere Vorteil, daß auch im Sender auf eine aufwendige Regelung des Senderfilters verzichtet werden kann, da auch für den Senderfilter gilt, daß dessen Filterfunktion nur auf etwa 1% Genauigkeit stabil zu sein braucht. Durch die erfindungsgemäße Verbesserung im Empfänger wird daher eine Vereinfachung des Senders erreicht, was letzlich dazu führt, daß auch die Sender mit geringerem Aufwand und geringen Kosten hergestellt werden können als bisher.

**Patentansprüche**

1. Empfänger (R) für ein optisches Nachrichtenübertragungssystem zur Übertragung kodierter optischer Nachrichtensignale, mit einer ersten optischen Empfangseinheit (PD1), der eine erste periodische optische Filtervorrichtung (Rx1) vorgeschaltet ist,
   **gekennzeichnet durch,**

   - eine zweite periodische optische Filtervorrichtung (Rx2), deren Umlaufzeit gegenüber der Umlaufzeit der ersten Filtervorrichtung um etwa ein Viertel der mittleren Lichtwellenperiode des empfangenen Nachrichtensignales verstimmt ist,
   - einen optischen Splitter (KOP), über den die Eingänge der ersten und der zweiten Filtervorrichtung (Rx1, Rx2) mit dem Eingang (IN) des Empfängers (R) verbunden sind,
   - eine zweite der zweiten Filtervorrichtung (Rx2) nachgeschaltete optische Empfangseinheit (PD2),
   - zwei Quadriereinrichtungen (Q1, Q2), die jeweils einer der beiden optischen Empfangseinheit (PD1, PD2) nachgeschaltet sind, um die Amplitude des ihr jeweils zugeführten Signales zu quadrieren und
   - eine Addiervorrichtung (AD) um die Ausgangssignale der beiden Quadriereinrichtungen (Q1, Q2) zu addieren.

2. Empfänger (R) nach Anspruch 1,

   - bei dem zumindest die erste Filtervorrichtung (Rx1) neben dem ersten Ausgang (P11), der mit der ersten optischen Empfangseinheit (PD1) verbunden ist, einen zweiten Ausgang (P12) umfaßt, dessen Ausgangssignal komplementär zu dem Ausgangssignal des ersten Ausganges (P11) ist und der mit einer dritten optischen Empfangseinheit (PD3) verbunden ist, und
   - der einen Differenzverstärker (DIF) aufweist, der das Ausgangssignal der dritten optischen Empfangseinheit (PD3) von dem Ausgangssignal der ersten optischen Empfangseinheit (PD1) subtrahiert.

3. Verfahren zum Übertragen von kodierten optischen Nachrichtensignalen in einem optischen Nachrichtenübertragungssystem, wobei das Nachrichtensignal in einem Sender (T) mittels eines Senderfilters (Tx) kodiert wird und in einem Empfänger (R) mittels einer ersten periodischen optischen Filtervorrichtung (Rxl) dekodiert und mittels einer ersten Empfangseinheit (PD1) in ein erstes elektrisches Signal umgewandelt wird,
   **dadurch gekennzeichnet,** daß

   - das kodierte optische Nachrichtensignal vor dem Dekodieren mittels eines optischen Splitters (KOP) aufgeteilt wird und der ersten (Rx1) und einer zweiten Filtervorrichtung (Rx2) zugeleitet wird, deren Umlaufzeit gegenüber der Umlaufzeit der ersten Filtervorrichtung (Rx1) um etwa ein Viertel der mittleren Lichtwellenperiode des empfangenen Nachrichtensignales verstimmt ist,
   - der in der zweiten Filtervorrichtung (Rx2) gefilterte Signalanteil mittels einer zweiten Empfangseinheit (PD2) in ein zweites elektrisches Signal umgewandelt wird,
   - die Amplitude des ersten elektrischen Signales mittels einer ersten Quadriereinrichtung (Q1) und die Amplitude des zweiten elektrischen Signales mittels einer zweiten Quadriereinrichtung (Q2) quadriert werden und daß
   - die beiden quadrierten elektrischen Signale mittels einer Addiervorrichtung (AD) addiert werden.

4. Empfänger (R) für ein optisches Nachrichtenübertragungssystem zur Übertragung kodierter optischer Nachrichtensignale, mit einer optischen Empfangseinheit (PD1), der eine periodische optische Filtervorrichtung (Rx) vorgeschaltet ist,
   **gekennzeichnet durch,**
   eine Modulationseinrichtung (MOD) zur Modulation der Filterfunktion der Filtervorrichtung (Rx) mit einer Frequenz, die größer ist, als die Bitwiederholrate der empfangenen Nachrichtensignale.

5. Empfänger (R) nach Anspruch 4,

- bei dem die Filtervorrichtung (Rx) neben dem ersten Ausgang (P1), der mit der ersten optischen Empfangseinheit (PD1) verbunden ist, einen zweiten Ausgang (P2) umfaßt, dessen Ausgangssignal komplementär zu dem Ausgangssignal des ersten Ausganges (P1) ist und der mit einer zweiten optischen Empfangseinheit (PD2) verbunden ist, und
- der einen Differenzverstärker (DIF) aufweist, der das Ausgangssignal der zweiten optischen Empfangseinheit (PD2) von dem Ausgangssignal der ersten optischen Empfangseinheit (PD1) subtrahiert.

6. Empfänger nach Anspruch 5, bei dem dem Differenzverstärker (DIF) ein Gleichrichter (GL) nachgeschaltet ist.

7. Emfpänger nach Anspruch 6, bei dem der Gleichrichter (GL) eine Multiplikationsvorrichtung (M), welche das Ausgangssignal des Differenzverstärkers (DIF) mit dem Ausgangssignal der Modulationsvorrichtung (MOD) multipliziert, und einen der Multiplikationsvorrichtung (M) nachgeschalteten Integrator (INT) enthält, der über eine Periode der Bitwiderholrate des empfangenen Nachrichtensignales integriert.

8. Verfahren zum Übertragen von kodierten optischen Nachrichtensignalen in einem optischen Nachrichtenübertragungssystem, wobei das Nachrichtensignal in einem Sender (T) mittels eines Senderfilters (Tx) kodiert wird und in einem Empfänger (R) mittels einer periodischen optischen Filtervorrichtung (Rx1) dekodiert und mittels einer Empfangseinheit (PD1) in ein elektrisches Signal umgewandelt wird,
**dadurch gekennzeichnet,** daß
die Filterfunktion der Filtervorrichtung (Rx) mit einer Frequenz, die größer ist als die Bitwiderholrate der empfangenen Nachrichtensignale mittels einer Modulationseinrichtung (MOD) moduliert wird.

9. Empfänger nach einem der Ansprüche 2 oder 5, bei dem die Filtervorrichtung (Rx1, Rx) ein Fabry-Perot-Interferometer ist und bei dem das Ausgangssignal des ersten Ausgangs (P11, P1) der transmittierte Signalanteil des empfangenen Nachrichtensignales ist und das Ausgangssignal des zweiten Ausgangs (P12, P2) der reflektierte Signalanteil des empfangenen Nachrichtensignales ist.

10. Empfänger nach einem der Ansprüche 2 oder 5, bei dem die Filtervorrichtung (Rx, Rx1) ein Mach-Zehnder-Interferometer mit zwei Ausgangszweigen ist und bei dem die beiden Ausgangssignale die beiden Signalanteile des empfangenen Nachrichtensignales aus den beiden Ausgangszweigen des Mach-Zehnder-Interferometers sind.

Fig.1

Fig.2

IN    KOP                                        Q1
                    Rx1    →    PD1    →    |x|²          AD
                                                         Σ    OUT →
                    Rx2    →    PD2    →    |x|²

                                                 Q2         R

Fig.3

GLAS

MIR2                                         MIR1

SIG1  →                                      FB1

                                                   FP

SIG 2  →                                     FB2         Fig.4

                                             MIR 3

Fig.5

EP 0 883 259 A2

Rx    PD1

IN    OUT

≈

MOD    R

Fig.6

Rx    PD1

IN    P1    DIF    OUT

P2

≈    PD2

MOD    R

Fig.7

EP 0 883 259 A2

Fig.8

Fig.9

Fig.10a  $\tau_{Rx}/\tau_{Tx}$ ⟶

Fig.10b  $\tau_{Rx}/\tau_{Tx}$ ⟶

Fig.11